(19) **Europäisches Patentamt / European Patent Office / Office européen des brevets**

(11) **EP 3 805 274 B1**

(12) # EUROPEAN PATENT SPECIFICATION

(45) Date of publication and mention of the grant of the patent:
**20.11.2024 Bulletin 2024/47**

(21) Application number: **19815560.8**

(22) Date of filing: **30.05.2019**

(51) International Patent Classification (IPC):
**C08F 8/32** (2006.01)    **C09D 5/00** (2006.01)
**C09D 11/106** (2014.01)    **C09D 123/26** (2006.01)
**C09J 123/26** (2006.01)

(52) Cooperative Patent Classification (CPC):
(C-Sets available)
**C09D 11/107; C08F 4/34; C08F 8/32; C08F 255/02; C08G 18/246; C08G 18/633; C08G 18/73; C08G 18/792; C09D 5/00; C09D 5/002; C09D 11/108; C09J 151/06; C09J 175/04**    (Cont.)

(86) International application number:
**PCT/JP2019/021580**

(87) International publication number:
**WO 2019/235359 (12.12.2019 Gazette 2019/50)**

(54) **MODIFIED POLYOLEFIN RESIN AND USE AND PRODUCTION METHOD OF THE SAME**

MODIFIZIERTES POLYOLEFINHARZ, DESSEN VERWENDUNG UND VERFAHREN ZU SEINER HERSTELLUNG

RÉSINE DE POLYOLÉFINE MODIFIÉE, SON UTILISATION ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2018 JP 2018106678**
**30.08.2018 JP 2018162078**

(43) Date of publication of application:
**14.04.2021 Bulletin 2021/15**

(73) Proprietor: **Nippon Paper Industries Co., Ltd.**
**Tokyo 114-0002 (JP)**

(72) Inventors:
• **SAKAKIBARA, Fumiyasu**
  **Tokyo 114-0002 (JP)**
• **DOI, Ryuji**
  **Tokyo 114-0002 (JP)**
• **KONDO, Kei**
  **Tokyo 114-0002 (JP)**
• **YOSHIMOTO, Takao**
  **Tokyo 114-0002 (JP)**
• **HIRAOKA, Chiaki**
  **Tokyo 114-0002 (JP)**

• **SEKIGUCHI, Shunji**
  **Tokyo 114-0002 (JP)**
• **ONO, Isamu**
  **Tokyo 114-0002 (JP)**
• **KIMURA, Koji**
  **Tokyo 114-0002 (JP)**
• **TAKENAKA, Takato**
  **Tokyo 114-0002 (JP)**
• **KOMOTO, Naosuke**
  **Tokyo 114-0002 (JP)**

(74) Representative: **Müller-Boré & Partner Patentanwälte PartG mbB**
**Friedenheimer Brücke 21**
**80639 München (DE)**

(56) References cited:
**EP-A1- 1 980 578    EP-A1- 2 314 648**
**JP-A- 2003 327 761    JP-A- 2004 520 474**
**JP-A- 2012 207 167    JP-A- 2014 047 241**
**JP-A- 2015 067 784    JP-A- H 107 725**

EP 3 805 274 B1

Remarks:
The file contains technical information submitted after the application was filed and not included in this specification

(52) Cooperative Patent Classification (CPC): (Cont.)

C-Sets
**C08F 8/32, C08F 255/02;**
**C08F 210/06, C08F 210/08;**
**C08F 255/02, C08F 222/06, C08F 220/1812;**
C08F 210/06, C08F 2500/34, C08F 2500/27

Remarks:
The file contains technical information submitted after the application was filed and not included in this specification

**Description**

Field

The present invention relates to a modified polyolefin resin, and to a use and a production method of the same.

Background

The modified polyolefin resin is being used in various uses such as an adhesive for a LiB soft pack laminate. Because the modified polyolefin resin is occasionally used under a high temperature condition, the resin is required to have a high heat resistance.

To enhance the heat resistance of the modified polyolefin resin, a method in which a resin having a high melting point is concurrently used is disclosed (for example, see Patent Literature 1). However, upon concurrently using the resin having a high melting point, when a concurrent use ratio of the resin having a high melting point is increased, it has been known that solution stability of the modified polyolefin resin decreases. Therefore, when the resin is used in such uses as an adhesive, a primer, and a paint, there is a room for improvement.

To achieve a balance between the heat resistance (peel strength under an atmosphere of 80°C or 120°C) and the solution stability of the modified polyolefin resin, a technology to optimize the concurrent use ratio of the resin having a high melting point is proposed (for example, see Patent Literature 2). In Patent Literature 2, a modified polyolefin resin composition is described that is a graft-modified resin obtained by graft-modification of a resin mixture, including 40 to 99 parts by weight of a polyolefin resin (A) and 1 to 60 parts by weight of an ethylene compound-an unsaturated carboxylic acid copolymer (B) containing 0.1 to 50% by mass of an unsaturated carboxylic acid derivative, with an unsaturated carboxylic acid derivative and/or an anhydride thereof (C), thereby having a weight-average molecular weight in the range of 20,000 to 150,000 and a grafting weight of the unsaturated carboxylic acid derivative and/or the anhydride thereof (C) in the range of 0.1 to 20% by mass.

Also relevant for the understanding of the present invention are Patent Literature documents 3, 4 and 5.

Patent Literature 3 describes a process for producing a modified propylene polymer, a modified propylene polymer, and a composition containing said modified propylene polymer,

Patent Literature 4 discloses a dispersion resin composition for use in a paint, an ink, an adhesive, or a primer which exhibits excellent water dispersibility.

Patent Literature 5 relates to a modified polyolefin resin aqueous dispersion composition suitable for use as a primer, a paint, an ink, and an adhesive.

Citation List

Patent Literature

Patent Literature 1: Japanese Patent Application Laid-open No. 2012-62352
Patent Literature 2: Japanese Patent Application Laid-open No. 2001-279048
Patent Literature 3: EP 1 980 578 A1.
Patent Literature 4: EP 2 314 648 A1.
Patent Literature 5: JP 2015 067784 A.

Summary

Technical Problem

When the modified polyolefin resin is used for a car LiB, the resin is required to have a further enhanced heat resistance. Under the present circumstances, the method to optimize the concurrent use ratio of the resin having a high melting point in order to balance the heat resistance and the solution stability cannot fully satisfy the required performance.

By the way, when the modified polyolefin resin composition of Patent Literature 2 is used in a primer, a composition for forming a coat film is prepared by using the modified polyolefin resin composition, and then, the coat film thereof is formed by a coating machine. After the coating machine is used, the composition for forming a coat film and the coat film that is dried remain in the coating machine; thus, these need to be removed by cleaning. However, even with a cleaning by using a cleaning solvent including water, residual matters occasionally remain unremoved. When the residual matters remain unremoved, these can cause variation in a coating amount by the coating machine. Therefore, improvement in the cleaning property is wanted.

An object of the present invention is to provide a modified polyolefin resin that is excellent in a balance between heat resistance and solution stability.

Another object of the present invention is to provide a modified polyolefin resin that can enhance a cleaning property upon cleaning inside of a coating machine with a cleaning solvent including water.

Solution to Problem

The inventors of the present invention carried out an extensive investigation on the problems described above; and as a result, it was found that when a polyolefin resin is modified with an $\alpha,\beta$-unsaturated carboxylic acid or a derivative thereof and with a specific amino alcohol under conditions that produce a product with a particular ratio of two peaks in an IR spectrum, these problems could be solved. On the basis of this finding, the present invention could be completed.

The invention is defined in the appended claims.

Advantageous Effects of Invention

According to the present invention, a modified polyolefin resin that is excellent in a balance between heat resistance and solution stability can be provided.

In addition, according to the present invention, a modified polyolefin resin that can enhance a cleaning property upon cleaning inside of a coating machine with a cleaning solvent including water can be provided. Description of Embodiments

Hereinafter, the present invention will be specifically explained on the basis of preferred embodiments. In this specification, "AA to BB" means AA or more and BB or less.

1. Modified Polyolefin Resin

The modified polyolefin resin according to the present invention is a polyolefin resin (I) that is modified with a component (II) and with a component (III). It is preferable that the modified polyolefin resin according to the present invention be further modified with a component (IV).

Namely, it is presumed that the modified polyolefin resin according to the present invention has a structure described below. First, the component (II) is graft-polymerized to the polyolefin resin (I). Also, at least part of a carbonyl group derived from the component (II) having been introduced by graft-polymerization forms an amide bond due to a nitrogen atom derived from the component (III). Therefore, in the modified polyolefin resin according to the present invention, it is presumed that the component (II) is graft-polymerized to the polyolefin resin (I), and that the modified polyolefin resin has an amide bond between at least part of the component (II) and the component (III), and also has a hydroxy group derived from the component (III).

That the modified polyolefin resin according to the present invention has a hydroxy group derived from the component (III) can also be presumed from measurement of an IR spectrum thereof. Namely, in the modified polyolefin resin according to the present invention, a peak derived from an amide bond can be observed in the IR spectrum thereof. The peak derived from the amide bond appears in the wave number range of 1,610 to 1,680 cm$^{-1}$, which is attributable to a C=O stretching vibration.

Also, in the modified polyolefin resin according to the present invention, a peak derived from a methylene bond in the polyolefin resin (I) skeleton can also be confirmed in the IR spectrum thereof. The peak derived from the methylene bond appears in the wave number range of 1,420 to 1,500 cm$^{-1}$, which is attributable to a C-H bending vibration.

The reason why the modified polyolefin resin according to the present obtained with a method different from a conventional optimization method of the concurrent use ratio of a resin having a high melting point is excellent in the heat resistance can be presumed as follows. By introducing a hydroxy group into the polyolefin resin, reactivity with a crosslinkable component that is present in other resin can be enhanced. As a result, a crosslinking density of a cured product can be increased. Accordingly, the heat resistance of the cured product can be enhanced.

The reason why the modified polyolefin resin according to the present invention can enhance a cleaning property upon cleaning inside of a coating machine with a cleaning solvent including water can be presumed as follows. The modified polyolefin resin according to the present invention has a prescribed amount of the hydroxy group; thus, even if the resin is in the dry state of a coat film, the hydroxy group can exist on the surface of the coat film. Because of this, an affinity with the cleaning solvent including water can be ensured. Therefore, upon cleaning inside of the coating machine with the cleaning solvent including water, residual matters can be dissolved with the cleaning solvent. Because of this, it can be presumed that the cleaning property thereof is excellent.

When the modified polyolefin resin according to the present invention is used in a primer, usually, on a coat film formed of a composition for forming a coat film including the modified polyolefin resin, an overcoat layer is formed by using overcoat paint. As for this overcoat paint, urethane resin type paint is preferably used. Usually, the urethane resin type paint includes a main ingredient such as a polyol having a plurality of hydroxy groups and a curing ingredient such as an isocyanate. These ingredients undergo a crosslinking reaction by heating in a burning process to form a urethane bond.

The modified polyolefin resin according to the present invention has a prescribed amount of the hydroxy group, so that there is a possibility that the hydroxy group undergoes a crosslinking reaction with the curing ingredient in the overcoat paint at an interface of the coat film. Because of this, it can be presumed that an adhesion property of the overcoat layer is enhanced thereby enhancing a water-resistant adhesion property as well. Alternatively, even if the crosslinking reaction does not take place, because the hydroxy group is a polar group, an affinity with the urethane paint, which is a polar group, is enhanced. Because of this, it can be presumed that an adhesion property of the overcoat layer is enhanced thereby enhancing the water-resistant adhesion property as well. Accordingly, when the modified polyolefin resin according to the present invention is used in a primer, it is expected that the coating performance of the overcoat layer can be enhanced.

When a peak height derived from the amide bond is designated as A and a peak height derived from the methylene bond is designated as B, these peaks being observed in the IR spectrum, an addition amount of the component (III) to the polyolefin resin (I) in the modified polyolefin resin according to the present invention can be assessed from a peak height ratio (A/B $\times$ 100).

The modified polyolefin resin according to the present invention has a peak height ratio (A/B $\times$ 100) in the range of 2.0 to 15.0%.

The lower limit of the peak height ratio (A/B $\times$ 100) is 2.0% or more. When the ratio is 2.0% or more, because the resin has the hydroxy group that is derived from the component (III), a crosslinking reaction with the curing ingredient takes place; thus, a crosslinking density can be made higher, or the affinity with the polar substance can be enhanced. Accordingly, the modified polyolefin resin that is excellent in a heat resistance of the cured product can be obtained.

The upper limit thereof is 15.0%, preferably 6.0% or less, and more preferably 5.0% or less, while still more preferably 3.0% or less. When the ratio is 6.0% or less, because the amount of the hydroxy group that is derived from the component (III) is appropriate, an increase in a solution viscosity due to a reaction of the component (III) with the component (II) that is grafted to a skeleton of the polyolefin resin can be suppressed. Accordingly, the modified polyolefin resin that is excellent in the solution stability can be obtained.

The lower limit of the peak height ratio (A/B X 100) is 2.0% or more, and more preferably 3.0% or more, while still more preferably 5.0% or more. When the ratio is 2.0% or more, because the amount of the hydroxy group that is derived from the component (III) is appropriate, even under a state of a dry coat film, the hydroxy group is present on a surface of the coat film. Because of this, the affinity with the cleaning solvent including water can be ensured. Therefore, upon cleaning inside of the coating machine with the cleaning solvent including water, the residual matters are dissolved with the cleaning solvent, so that the modified polyolefin resin that is excellent in cleaning property can be obtained.

An upper limit of the ratio is 15.0% or less. When the ratio is 15.0% or less, an excessive increase in polarity of the modified polyolefin resin due to addition of the component (III) can be suppressed, so that an adhesion property to a non-polar resin substrate such as a polyolefin substrate can be ensured.

Accordingly, considering the balance of the adhesion property to both the substrate and the overcoat layer, the ratio is in the range of 2.0 to 15.0%, and more preferably in the range of 3.0 to 15.0%, while still more preferably in the range of 5.0 to 15.0%.

In the modified polyolefin resin according to the present invention, a weight-average molecular weight thereof measured with gel permeation chromatography (GPC) in terms of polystyrene is preferably in the range of 10,000 to 200,000, while more preferably in the range of 30,000 to 200,000, 30,000 to 150,000, or 30,000 to 130,000.

The measurement condition of GPC is as follows. The weight-average molecular weights in Examples in the paragraphs to be described later are obtained with this condition.

Measurement instrument: HLC-8320 GPC (manufactured by Tosoh Corp.)
Eluting solution: tetrahydrofuran
Column: TSKgel (manufactured by Tosoh Corp.)
Standard substance: polystyrene (manufactured by Tosoh Corp. and GL Sciences Inc.)
Detector: Differential refractometer (manufactured by Tosoh Corp.)

1-1. Polyolefin Resin (I)

There is no particular restriction in the polyolefin resin (I); this may be a polymer of a single olefin or a copolymer formed of two or more olefin polymers. When the resin is the copolymer, this may be any of a random copolymer and a block copolymer. Olefins of $\alpha$-olefins are preferably used. Illustrative examples of the $\alpha$-olefin include ethylene, propylene, 1-butene, 1-pentene, 1-hexene, 1-heptene, and 1-octene.

In view of fully exhibiting the adhesion property to a non-polar resin substrate such as a polypropylene substrate, as the polyolefin resin (I), polypropylene (propylene homopolymer), ethylene-propylene copolymer, propylene-1-butene copolymer, and ethylene-propylene-1-butene copolymer are used more preferably.

In this specification, "polypropylene" represents a polymer whose basic unit is a composition unit derived from propylene. "Ethylene-propylene copolymer" represents a copolymer whose basic units are composition units derived from ethylene and propylene. "Propylene-butene copolymer" represents a copolymer whose basic units are composition units derived from propylene and butene. These (co)polymers may include a small amount of a composition unit derived from an olefin other than these basic units. The content thereof is permissible so far as inherent performance of the resin is not eminently damaged. The composition unit derived from the other olefin is sometimes mixed, for example, in a process before production of the modified polyolefin resin.

It is preferable that the polyolefin resin (I) include 50% or more by mole of the composition unit derived from propylene, relative to 100% by mole of the composition units. When the content of the composition unit derived from propylene is in the range described above, the adhesion property to a non-polar resin substrate such as a propylene resin can be retained.

It is preferable that the polyolefin resin (I) be the one obtained by using a metallocene catalyst as a polymerization catalyst.

A publicly known metallocene catalyst can be used. It is preferable that the metallocene catalyst be the one that is obtained from a combination of components (1) and (2), and as necessary, a component (3), as described below.

Component (1): a metallocene complex formed of a compound having at least one conjugated 5-membered ring ligand and a transition metal belonging to the 4 to 6 groups in the periodic table;
Component (2): an ion-exchangeable layered silicate salt; and
Component (3): an organic aluminum compound.

The metallocene catalyst brings about following characteristics. A molecular weight distribution of the polyolefin resin (I) is narrowed. When the polyolefin resin (I) is a copolymer, a randomness in copolymerization is high, a composition distribution is narrow, and a range of copolymerizable comonomer is wide. The polyolefin resin (I) having these characteristics can be suitably used in the modified polyolefin resin according to the present invention.

When the ethylene-propylene copolymer and the propylene-butene copolymer are random copolymers, it is preferable that the copolymers include the composition unit derived from ethylene or the composition unit derived from butene in the range of 5 to 50% by mole and the composition unit derived from propylene in the range of 50 to 95% by mole, relative to 100% by mole of the composition units.

The weight-average molecular weight of the polyolefin resin (I) is not particularly restricted. However, the weight-average molecular weight of the modified polyolefin resin is preferably in the range of 10,000 to 200,000, while more preferably in the range of 30,000 to 200,000, 30,000 to 150,000, or 30,000 to 130,000. Therefore, when the weight-average molecular weight of the polyolefin resin (I) is more than 200,000, it is preferable to adjust the weight-average molecular weight of the modified polyolefin resin to be obtained within the above-mentioned range. Specifically, degradation thereof is carried out in the presence of a heat or a radical so as to adjust the molecular weight thereof to a suitable range, for example, 200,000 or less.

Here, the weight-average molecular weight of the polyolefin resin (I) is the value measured with a similar manner described before by using the gel permeation chromatography (GPC, standard substance: polystyrene). The measurement conditions are the same as those described before.

The polyolefin resin (I) may be used singly or as a combination of two or more resins. When used as the combination of two or more resins, the ratio thereof is not particularly restricted.

1-2. α,β-Unsaturated Carboxylic Acid or Derivative Thereof (II) (Component (II))

Illustrative examples of the α,β-unsaturated carboxylic acid in the component (II) include fumaric acid, maleic acid, itaconic acid, mesaconic acid, citraconic acid, aconitic acid, and nadic acid. Among these, unsaturated dicarboxylic acids are preferable. Illustrative examples of the derivative of the α,β-unsaturated carboxylic acid in the component (II) include an acid anhydride of the α,β-unsaturated carboxylic acid, as well as monomethyl fumarate, monoethyl fumarate, monopropyl fumarate, monobutyl fumarate, dimethyl fumarate, diethyl fumarate, dipropyl fumarate, dibutyl fumarate, monomethyl maleate, monoethyl maleate, monopropyl maleate, monobutyl maleate, dimethyl maleate, diethyl maleate, dipropyl maleate, dibutyl maleate, maleimide, and N-phenyl maleimide. Among these, an acid anhydride of the α,β-unsaturated carboxylic acid is preferable.

From a viewpoint of having a suitable amount of the hydroxy group in the modified polyolefin resin, for example, in order to enhance the cleaning property thereof, the component (II) is preferably maleic anhydride, itaconic anhydride, and maleic acid, while maleic anhydride is more preferable.

The component (II) may be used singly or as a combination of two or more components. Namely, the component (II) is at least one compound selected from the group consisting of the α,β-unsaturated carboxylic acids and the derivatives thereof. A combination of two or more α,β-unsaturated carboxylic acids may be used, or a combination of two or more derivatives thereof may be used. A combination of one or more α,β-unsaturated carboxylic acids and one or more derivatives thereof may also be used. When a combination of two or more of them is used, the ratio thereof is not particularly restricted.

1-3. Amino Alcohol (III) (Component (III))

The component (III) has, in addition to a hydroxy group, a primary or a secondary amino group. It is preferable that the component (III) have a primary amino group.
Illustrative examples of the component (III) include 2-aminoethanol, 3-amino-1-propanol, 4-amino-1-butanol, 5-amino-1-pentanol, 2-amino-1-butanol, 2-amino-2-methyl-1-propanol, 2-amino-2-methyl-1,3-propanediol, 2-methylamino-2-methyl-1-propanol, N-aminoethyl ethanolamine, and 2-(2-aminoethoxy) ethanol. Among these, 2-aminoethanol, 2-(2-aminoethoxy) ethanol, 3-amino-1-propanol, 4-amino-1-butanol, and 2-amino-2-methyl-1-propanol are preferable.
The component (III) may be used singly or as a mixture of two or more components. When a combination of two or more components is used, the ratio thereof is not particularly restricted.

1-4. (Meth)acrylate Ester (IV) (Component IV))

The (meth)acrylate ester is a compound that is represented by a general formula (1). When modified with the component (IV), a molecular weight distribution of the modified polyolefin resin can be narrowed, so that low-temperature solution stability, compatibility with other resin, and adhesion property thereof can be enhanced. The (meth)acrylate ester represented by the general formula (1) may be used singly or as a mixture of plural kinds of them with an arbitrary ratio.

Chem. 2

$$CH_2=C(R^1)COOR^2 \qquad (1)$$

In the general formula (1), $R^1$ represents H or $CH_3$, while $CH_3$ is preferable. $R^2$ represents $C_nH_{2n+1}$, where n represents an integer of 8 to 18, preferably 8 to 15, and more preferably 8 to 14, while still more preferably 8 to 13. The compound represented by the general formula (1) is preferably lauryl (meth)acrylate, tridecyl (meth)acrylate, and octyl (meth)acrylate, while lauryl methacrylate, octyl methacrylate, and tridecyl methacrylate are more preferable.

2. Production Method of Modified Polyolefin Resin

The production method of the modified polyolefin resin according to the present invention includes a process of modifying the polyolefin resin (I) with the component (II), the component (III), and the arbitrary component (IV) to obtain the modified polyolefin resin. More specifically, the method includes a process (A) at which the polyolefin resin (I) is modified with the component (II) and the arbitrary component (IV) to obtain a precursor resin (hereinafter, this process is sometimes called "process (A)") and a process (B) at which the precursor resin thus obtained is modified with the component (III) to obtain the modified polyolefin resin (hereinafter, this process is sometimes called "process (B)"). Hereinafter, the production method described above will be explained in detail.

2-1. Process (A)

There is no particular restriction at the process (A) so far as the component (II) and the arbitrary component (IV) can be introduced into the polyolefin resin (I), and it is preferable that the component (II) and the arbitrary component (IV) be introduced into the polyolefin resin (I) by graft polymerization. Upon carrying out a reaction of the graft polymerization, a radical generating agent may be used. Illustrative examples of the process (A) include: a solution method in which the component (I), the component (II), and the arbitrary component (IV) are dissolved by heating into a solvent such as toluene followed by addition of a radical generating agent to the resulting mixture; and a melt kneading method in which the component (I), the component (II), and the arbitrary component (IV), as well as a radical generating agent are added into a machine such as a Banbury mixer, a kneader, or an extruder thereby kneading them in the machine. Here, when two or more of the component (II) and the arbitrary component (IV) are used, these may be added all at once or sequentially. In the case of sequential addition, an order of the graft polymerization with the component (II) and with the arbitrary component (IV) is not particularly restricted. When two or more of the component (II) and the arbitrary component (IV) are used, the ratio thereof is not particularly restricted.

The use amount of the component (II) in the graft polymerization reaction is preferably in the range of 0.5 to 20 parts by mass, while more preferably in the range of 0.5 to 10 parts by mass, relative to 100 parts by mass of the polyolefin resin (I).

The use amount of the arbitrary component (IV) in the graft polymerization reaction is preferably in the range of 0.1 to 10 parts by mass, while more preferably in the range of 0.4 to 4 parts by mass, relative to 100 parts by mass of the polyolefin resin (I). When the use amount of the component (IV) is 0.1 or more parts by mass, the molecular weight distribution of the modified polyolefin resin can be kept within a sufficiently narrow range. Namely, because an adverse effect of a high molecular weight portion can be avoided, dissolvability into a solvent, low-temperature solution stability, and compatibility with other resin can be retained well. Also, because an adverse effect of a low molecular weight portion can be avoided, an adhesion property thereof can be enhanced. When the use amount of the component (IV) is 10 or less parts by mass, because generation of a substance not reacted in the graft polymerization can be avoided, an adhesion property to a resin body to be adhered can be retained well.

The radical generating agent may be arbitrarily selected from heretofore known radical generating agents. Among the heretofore known radical generating agents, an organic peroxide compound is preferable. Illustrative examples of the organic peroxide compound include di-t-butyl peroxide, dicumyl peroxide, t-butylcumyl peroxide, benzoyl peroxide, dilauryl peroxide, cumene hydroperoxide, t-butyl hydroperoxide, 1,1-bis(t-butylperoxy)-3,5,5-trimethylcyclohexane, 1,1-bis(t-butylperoxy)-cyclohexane, cyclohexanone peroxide, t-butylperoxy benzoate, t-butylperoxy isobutyrate, t-butylperoxy-3,5,5-trimethyl hexanoate, t-butylperoxy-2-ethyl hexanoate, t-butylperoxy isopropyl carbonate, cumylperoxy octoate, and 2,5-dimethyl-2,5-bis(t-butylperoxy)hexane. Among these, di-t-butyl peroxide, dilauryl peroxide, and 2,5-dimethyl-2,5-bis(t-butylperoxy)hexane are preferable.

Lower limit of the addition amount of the radical generating agent is preferably 1 or more parts by mass, while more preferably 3 or more parts by mass, relative to 100 parts by mass of the sum of the component (II) and the arbitrary component (IV). When the amount is 1 or more parts by mass, the component (II) and the arbitrary component (IV) can be introduced by the graft polymerization. The upper limit of the addition amount thereof is preferably 100 or less parts by mass, while more preferably 50 or less parts by mass. The amount of 100 or less parts by mass is economical.

The component (II) and the arbitrary component (IV) that are not graft-polymerized to the polyolefin resin (I) at the process (A), i.e., the unreacted substances, may be removed by extraction with, for example, a poor solvent.

By so doing, the precursor resin is obtained at the process (A). Although the grafting amount of each of the component (II) and the arbitrary component (IV) is not particularly restricted, the amount is preferably in the range of more than 0 to 20% or less by mass, and more preferably in the range of more than 0 to 10% or less by mass, while still more preferably in the range of more than 0% by mass to 5% or less by mass, relative to 100% by mass of the precursor resin. When the grafting amount is within the range described above, the amount of the hydroxy group in the modified polyolefin resin can be adjusted. As a result, for example, the cleaning property thereof can be enhanced furthermore.

The introduction amount (grafting amount) of the $\alpha,\beta$-unsaturated carboxylic acid or the derivative thereof (II) is measured with an alkali titration method. The introduction amount (grafting amount) of the (meth)acrylate ester is obtained from $^1$H-NMR.

To bring the weight-average molecular weight of the modified polyolefin resin into the preferable range described before, the weight-average molecular weight of the precursor resin measured with the gel permeation chromatography (GPC) in terms of polystyrene is preferably in the range of 10,000 to 200,000.

The melting point of the precursor resin measured with a differential scanning calorimeter (DSC) is preferably in the range of 50 to 150°C, while more preferably in the range of 50 to 125°C.

The acid value of the precursor resin measured with an alkali titration method is preferably in the range of 5 to 50 mgKOH/g. When the acid value is within the range described above, the amount of the hydroxy group is suitable relative to the modified polyolefin resin to be finally obtained. As a result, for example, the cleaning property thereof can be enhanced furthermore.

2-2. Process (B)

At the process (B), first the precursor resin obtained at the process (A) is dissolved into an organic solvent by stirring for a prescribed period of time with heating at the temperature equal to or higher than a melting point of the precursor resin and the temperature equal to or lower than a boiling point of the organic solvent (usually in the range of 50 to 200°C, preferably in the range of 50 to 110°C). Illustrative examples of the organic solvent include aromatic solvents such as toluene and xylene; ester solvents such as ethyl acetate and butyl acetate; ketone solvents such as methyl ethyl ketone, methyl butyl ketone, and ethyl cyclohexane; and aliphatic or alicyclic hydrocarbon solvents such as cyclohexane, methyl cyclohexane, nonane, and decane. These organic solvents may be used singly or as a mixed solvent of two or more of them. In view of an environmental concern, solvents other than aromatic solvents are preferably used as the organic solvent; a mixed solvent of an alicyclic hydrocarbon solvent with an ester solvent or with a ketone solvent is used more preferably.

Next, the component (III) is added. By so doing, the modified polyolefin resin is obtained. Namely, it is presumed that the amide bond is formed between the carbonyl group derived from the component (II) that has been introduced into the polyolefin resin (I) by the graft polymerization and the amino group derived from the component (III). As explained above, it is presumed that the hydroxy group derived from the component (III) is introduced into the modified polyolefin resin by intervention of the component (II) that has been introduced into the polyolefin resin (I) by the graft polymerization.

At the process (B), the modified polyolefin resin may also be prepared as a water dispersion composition having the modified polyolefin resin dispersed into a water dispersion medium. In this case, first, the precursor resin that has been obtained at the process (A) is added into an organic solvent such as toluene or xylene to obtain a mixed solution.

To this mixed solution, an amphipathic solvent may be added furthermore. The amphipathic solvent is a compound represented, for example, by the following general formula (2).

$$R^3\text{-}O\text{-}(C_1H_{21}O)_mH \qquad (2)$$

In the general formula (2), $R^3$ represents $C_nH_{2n+1}$, where n represents an integer of 1 to 10, and n is preferably 8 or less, more preferably 7 or less, still more preferably 6 or less, and far still more preferably 5 or less, while especially preferably 4 or less; 1 represents an integer of 1 to 5, and 1 is preferably 4 or less, more preferably 3 or less, and still more preferably 2 or less, while far still more preferably 1.

The compound represented by the general formula (2) has a structure having an ether bond between a glycol with an alkyl group, thereby having a hydrophobic group and a hydrophilic group in one molecule. Because of this, when the amphipathic solvent is added, the modified polyolefin resin can be readily dispersed and emulsified in water; thus, the water dispersion composition thereby obtained exhibits excellent storage stability.

Compounds represented by the general formula (2) are: ethylene glycol monomethyl ether, ethylene glycol monoethyl ether, ethylene glycol monopropyl ether, ethylene glycol monoisopropyl ether, ethylene glycol monobutyl ether, ethylene glycol monoisobutyl ether, ethylene glycol mono-t-butyl ether, ethylene glycol monohexyl ether, ethylene glycol monodecyl ether, propylene glycol monomethyl ether, propylene glycol monoethyl ether, propylene glycol monopropyl ether, and propylene glycol monobutyl ether. Among these, ethylene glycol monobutyl ether (butyl cellosolve), propylene glycol monomethyl ether, and propylene glycol monopropyl ether are preferable, while ethylene glycol monobutyl ether and propylene glycol monopropyl ether are more preferable.

The molecular weight of the compound represented by the general formula (2) is less than 200. With this, a rise in a boiling temperature of the water dispersion composition can be suppressed; therefore, after a coat film is formed by using this composition, drying of the coat film at a high temperature or for a long period of time can be omitted. The molecular weight of the compound represented by the general formula (2) is the molecular weight obtained from a relative atomic mass based on 12C=12, which is approved by the IUPAC atomic weight committee.

The amphipathic solvent may be used singly or as a combination of two or more solvents. When a combination of two or more solvents is used, the ratio thereof is not particularly restricted.

Usually, the mixed solution is stirred for a prescribed period of time with heating in the temperature range of 50 to 200°C.

Next, to the mixed solution thus heated and stirred is further added the component (III); and then, the resulting solution is stirred with heating for a prescribed period of time. At this time, the solution may be stirred with heating for a prescribed period of time after a surfactant or the amphipathic solvent is added thereto. From a viewpoint of having a suitable amount of the hydroxy group, the amount of the component (III) is preferably in the range of 1 to 20 parts by mass relative to 100 parts by mass of the precursor resin.

As for the surfactant, any of a nonionic surfactant and an anionic surfactant may be used. The nonionic surfactant is preferably used because the water resistance of the water dispersion composition to be obtained can be enhanced furthermore with this.

The nonionic surfactant that can be mentioned are: polyoxyethylene alkyl ethers, polyoxyethylene alkylene alkyl ethers, polyoxyethylene derivatives, polyoxyethylene aliphatic acid esters, polyoxyethylene polyalcohol aliphatic acid esters, polyoxyethylene propylene polyols, polyoxyethylene sorbitan aliphatic acid esters, polyoxyethylene cured castor oil, polyoxyalkylene polycyclic phenyl ethers, polyoxyethylene alkylamines, alkylalkanol amides, and polyalkylene glycol (meth)acrylates. Among these, polyoxyethylene alkyl ethers, polyoxyethylene aliphatic acid esters, polyoxyethylene sorbitan aliphatic acid esters, and polyoxyethylene alkylamines are preferable.

The anionic surfactant that can be mentioned are: alkylsulfate esters, polyoxyethylene alkyl ether sulfate salts, alkylbenzene sulfonate salts, $\alpha$-olefin sulfonate salts, methyl laurate salts, sulfosuccinate salts, ether sulfonate salts, ether carboxylate salts, aliphatic acid salts, naphthalene sulfonic acid formalin condensate, alkylamine salts, quaternary ammonium salts, alkylbetaines, and alkylamine oxides. Among these, polyoxyethylene alkyl ether sulfate salts and sulfosuccinate salts are preferable.

After having been heated and stirred, usually, the temperature of the mixed solution is brought to lower than 100°C. Next, water or preferably hot water is added thereto. At this time, a solid content may be prepared by distilling the organic solvent or the amphipathic solvent out, or by adding water. The solid content in the water dispersion composition is made to in the range of, for example, 15 to 50% by mass.

When the amphipathic solvent is used upon preparing the water dispersion composition, the amphipathic solvent is used such that the amount thereof may be preferably 0.5% or more by mass, while more preferably 1% or more by mass, in the water dispersion composition. Also, the amphipathic solvent is used such that the amount thereof may be preferably 15% or less by mass, while more preferably 10% or less by mass, in the water dispersion composition. Namely, the amphipathic solvent is used such that the amount thereof may be preferably in the range of 0.5 to 15% by mass, while more preferably in the range of 1 to 10% by mass, in the water dispersion composition.

When the surfactant is used upon preparing the water dispersion composition, the addition amount of the surfactant is preferably in the range of 0.1 to 30% by mass, while more preferably in the range of 3 to 20% by mass, relative to 100% by mass of the precursor resin. When the amount is more than 30% by mass, a decrease in the performance of a coat film due to an excessive emulsifier can occasionally happen upon forming the coat film. In addition, when this was made to a dry coat film, blocking can occasionally happen due to a plasticizing effect and a bleed phenomenon.

The peak height ratio (A/B $\times$ 100) obtained by measurement of the IR spectrum of the modified polyolefin resin can be adjusted by appropriately changing the solvent, the stirring temperature of the mixed solution, and the stirring period thereof upon preparation of the water dispersion composition. More specifically, by raising the stirring temperature, or prolonging the stirring period, the amide bond is produced more, so that the value of (A/B $\times$ 100) increases. After addition of the component (III), when water is further added, an ammonium salt due to the component (III) can be formed if there is the component (III) unreacted thereby not forming the amide bond. This helps to generate a static repulsion effect of the ammonium salt, so that the stability of the water dispersion composition can be enhanced.

3. Composition for Forming Coat Film

It is preferable that the composition for forming a coat film that contains the modified polyolefin resin include the modified polyolefin resin according to the present invention, and further, if necessary, at least one ingredient selected from the group consisting of a solution, a curing agent, and an adhesive ingredient, as other components. Specifically, the composition for forming a coat film can be suitably used as a primer composition, a paint composition, an ink composition, and an adhesive composition.

Solution

One embodiment of the composition for forming a coat film is a resin composition that includes the modified polyolefin resin and a solution. An organic solvent may be mentioned as the solution. Illustrative examples of the organic solvent include aromatic solvents such as toluene and xylene; ester solvents such as ethyl acetate and butyl acetate; ketone solvents such as methyl ethyl ketone, methyl butyl ketone, and ethyl cyclohexane; and aliphatic or alicyclic hydrocarbon solvents such as cyclohexane, methyl cyclohexane, nonane, and decane. These organic solvents may be included in the resin composition singly or as a mixed solvent of two or more of them. In view of an environmental concern, solvents other than aromatic solvents are preferably used as the organic solvent, while a mixed solvent of an alicyclic hydrocarbon solvent with an ester solvent or with a ketone solvent is used more preferably.

Curing Agent

Another embodiment of the composition for forming a coat film is a curing composition that includes the modified polyolefin resin and a curing agent. Illustrative examples of the curing agent include polyfunctional isocyanate compounds, epoxy compounds, polyamine compounds, and crosslinking agents having these functional groups blocked with a protection group. In the composition for forming a coat film that includes the modified polyolefin resin according to the present invention, it is preferable to use a compound having an isocyanate group, which is very reactive with the hydroxy group, while a polyfunctional isocyanate compound is more preferable. The curing agent may be used singly or as a combination of two or more curing agents.

Blending amount of the curing agent can be arbitrarily selected in accordance with the content of the component (III) in the modified polyolefin resin according to the present invention. When the curing agent is blended thereto, a catalyst such as an organic tin compound or a tertiary amine compound may be concurrently used in accordance with the purpose.

Adhesive Ingredient

Still another embodiment of the composition for forming a coat film is an adhesive composition that includes the modified polyolefin resin and an adhesive ingredient. A heretofore known adhesive ingredient such as a polyester-type adhesive, a polyurethane-type adhesive, or an acrylic adhesive may be used so far as the adhesive ingredient does not impair the intended effects.

The composition for forming a coat film may be, for example, a dispersion composition having the modified polyolefin resin dispersed into a dispersion medium. The dispersion medium may be any of a non-aqueous type and a water-based type (water dispersion composition). Illustrative examples of the non-aqueous solvent include organic solvents such as xylene, toluene, and benzene. When the water dispersion composition is prepared, the solid content therein is in the range of 15 to 50% parts by mass.

When the composition for forming a coat film is the water dispersion composition, pH of the water dispersion composition is preferably 5 or higher, while more preferably in the range of 6 to 11. When pH is lower than 5, neutralization is insufficient, so that occasionally the modified polyolefin resin is not dispersed in water. In addition, even if the modified polyolefin resin can be dispersed in water, the modified polyolefin resin deposits and separates with passage of time; thus, this can occasionally cause deterioration in the storage stability thereof. On the other hand, when pH is higher than 11, this can occasionally cause problems in compatibility with other components as well as in an operational safety. Here, pH may be adjusted by the amount of the component (III) that is added upon preparation of the water dispersion composition.

When the composition for forming a coat film is the water dispersion composition, the average particle diameter of the resin that is emulsified or dispersed in water is preferably 300 nm or lees, while more preferably 200 nm or less. When the average particle diameter is more than 300 nm, this can occasionally cause deterioration in the storage stability of the water dispersion composition or in the compatibility with other resin deteriorates. In addition, it can occasionally cause deterioration in physical properties of a coat film, such as an adhesion property to a substrate, a solvent resistance, a water resistance, and a blocking resistance, upon forming the coat film.

When addition amount of the emulsifier is increased, the particle diameter can be made extremely small. However, physical properties of the coat film, such as an adhesion property to a substrate, a water resistance, and a gasohol resistance, tend to deteriorate. In this specification, the average particle diameter is the value obtained by measurement of the particle diameter distribution with a light diffusion method. The particle diameter can be adjusted, among other things, with the addition amount and the kind of the emulsifier and with a stirring power upon emulsifying the resin in water.

Because the modified polyolefin resin according to the present invention is excellent in the heat resistance and the solution stability, it is preferable to use this as an adhesive composition for a metal and/or a resin, or as a primer. For example, this is useful as an adhesive in a laminate film such as an aluminum laminate film.

The modified polyolefin resin according to the present invention may be one material of a layer that constitutes a laminate body. The laminate body has a layer including the modified polyolefin resin, a metal layer, and a resin layer. Arrangement of these layers in the laminate body is not particularly restricted; illustrative examples thereof include an embodiment in which the metal layer and the resin layer are arranged so as to sandwich the layer including the modified polyolefin resin therebetween, and an embodiment in which there are a first resin layer and a second resin layer that are arranged so as to sandwich the metal layer therebetween, and the layers including the modified polyolefin resin are sandwiched between the metal layer and each of the resin layers. The laminate body may be used or is preferably used for an exterior material of a lithium ion secondary battery, a condenser or an electric double layered capacitor.

By the way, polyolefin resins such as a polypropylene-type resin and a polyethylene-type resin are excellent in moldability, chemical resistance, water resistance and electric properties, so that they are widely used as molded articles such as a sheet and a film. However, contrary to polar substrates such as a polyurethane-type resin, a polyamide-type resin, an acrylic resin, and a polyester-type resin, polyolefin-type resin substrates are non-polar and crystalline. Therefore, they are difficult to adhere with ink or paint.

To improve the adhesion property, a method is proposed in which a primer that is capable of adhering with a polyolefin resin is undercoated on a substrate surface, and then, a urethane resin-type paint is coated on this undercoat layer. In this primer, conventionally, a modified polyolefin resin having a polar group (a carboxy group, an acid anhydride group) added thereto has been used. By adding the polar group, an affinity not only with the polyolefin-type substrate but also with the urethane resin-type paint is enhanced thereby improving the adhesion property. Usually, a conventional modified polyolefin resin is applied in the form of a solution in an organic solvent, or as a water dispersion In recent years, in view of a safety and health concern and reduction of an environmental pollution, the water dispersion is preferably used.

The water dispersion of the conventional modified polyolefin resin is widely used as a primer for a resin substrate in an automobile bumper. This is tc reduce volatile organic compounds (VOC) that are discharged from a painting factory because the concern to a safety and health issue and the movement to reduce the environmental pollution are increasing.

In a painting factory, when a plurality of colors are painted by using the same painting machine, procedures of discharging a paint inside the painting machine, cleaning a path of the paint with a thinner, and supplying a next color to the path are repeated. The paint and the thinner that are discharged at the time of a color change serve as one cause of an increase in the discharge amount of VOC. Therefore, if the used paint can be readily cleaned with a thinner, the thinner for cleaning can be saved, and this can significantly contribute to the reduction in VOC.

On the other hand, in general, the resin for a primer is required to have a high coating applicability in order to enhance a strength and a finishing property of a coat film. A solvent-based paint can be comparatively readily washed out with a cleaning thinner even if the resin becomes a dry coat film in the painting machine. However, in the case of a water-based paint, the water-based emulsion and the dried coat film need to be washed out together. Therefore, a mixed solution of water and an ether-type solvent is used as the cleaning solvent. In this case, however, the affinity of the dried coat film with the cleaning solvent is so low that the resin having a better coating applicability is poorer in the cleaning property; and thus, a large amount of the cleaning solvent needs to be used. Accordingly, the conventional modified polyolefin resin is difficult to compatibly satisfy both the coating performance and the cleaning property to the painting machine.

Contrary to this, according to the composition for forming a coat film (specifically, the water dispersion composition) using the modified polyolefin resin according to the present invention, the cleaning property to the painting machine can be enhanced. In addition, this is excellent in the adhesion property of the overcoat layer and in the coating performance such as the water-resistant adhesion property of the overcoat layer. Namely, both the coating performance and the cleaning property to the painting machine can be compatibly satisfied. As discussed above, this is because the modified polyolefin resin according to the present invention has an appropriate amount of the introduced hydroxy group.

More specifically, the composition for forming a coat film using the modified polyolefin resin according to the present invention (specifically, the water dispersion composition) can effectively function as an intermediate medium to a substrate having a poor adhesion property thereby being difficult to be applied with a paint, such as, for example, a molded article of a non-polar resin. This is also useful, for example, as an adhesive between polyolefin-type substrates such as polypropylene and polyethylene, which are poor in the adhesion property. This can be used in the substrate such as the molded article of the non-polar resin regardless of whether or not the surface thereof is treated with plasma or corona like. In addition, this is also suitable to a polar substrate such as polyesters including polyethylene terephthalate, as well as polyurethanes and polyamides.

Therefore, the composition for forming a coat film can be suitably used as an adhesive, a primer, a paint binder and an ink binder

When the composition for forming a coat film is the water dispersion composition, this can be produced by blending the modified polyolefin resin with other ingredient, as necessary, depending on the use thereof. Alternatively, the composition for forming a coat film may be produced later by emulsification of the modified polyolefin resin according to the present invention. For example, this can be produced by a heretofore known method such as a forced emulsification method, a phase inversion emulsification method,, a D-phase emulsification method, or a gel emulsification method. More specifically, an organic solvent such as toluene or xylene, and a surfactant or an amphipathic solvent are mixed with the modified polyolefin resin; and then, water is added thereto. When an ingredient other than water is mixed, they may be heated as necessary (for example, in the range of 50 to 200°C). Next, depending on the use thereof, other ingredient is blended, as necessary. In this way, the composition for forming a coat film can be prepared as the water dispersion. Examples

Hereinafter, the present invention will be explained more specifically by Examples. Examples below are described in order to properly explain the present invention, not to limit the present invention. Values of the physical properties of the modified polyolefin resin and assessment of the modified polyolefin resin were carried out with the methods described below. Hereinafter, "part" means part by mass unless otherwise specifically mentioned.

Weight-Average Molecular Weight:

This was measured with the following condition by GPC (manufactured by Tosoh Corp., standard substance:

polystyrene resin).
Measurement instrument: HLC-8320 GPC (manufactured by Tosoh Corp.)
Eluting solution: tetrahydrofuran
Column: TSKgel (manufactured by Tosoh Corp.)
Detector: Differential refractometer (manufactured by Tosoh Corp.)

Melting Point:

This was measured by using a DSC measurement instrument (DISCOVERY DSC2500: manufactured by TA Instruments Japan Inc.) with the method described below in accordance with JIS K7121-1987. About 5 mg of a sample was kept under a molten state by heating at 150°C for 10 minutes. This was cooled at the temperature descending rate of 10°C/minute, and kept at -50°C stably. Then, this was heated at the temperature ascending rate of 10°C/minute till 150°C to measure a melting peak temperature at the time of melting. This temperature was assessed as Tm.

Grafting Amount (% by mass) and Acid Value (mg/KOH) of $\alpha,\beta$-Unsaturated Carboxylic Acid or of Derivative Thereof:

This was measured by an alkali titration method.

Grafting Amount (% by weight) of (Meth)acrylate Ester:

This was measured by $^1$H-NMR.

IR Spectrum:

A water dispersion composition of the modified polyolefin resin was dried at 40°C for 24 hours to obtain a dried product. The dried product thus obtained was dissolved into an organic solvent to obtain a solution. This solution was applied onto a KBr plate, and then dried to form a thin film. The IR absorption spectrum of this film in the range of 400 to 4,000 cm$^{-1}$ was measured with FT-IR (FT/IR-4100; manufactured by JASCO Corp.). The analysis thereof was done with a software attached to this instrument (Spectro Manager; manufactured by JASCO Corp.).
The peak appeared in the wave number range of 1,610 to 1,680 cm$^{-1}$ was attributed to the peak derived from the amide bond, and the peak appeared in the wave number range of 1,420 to 1,500 cm$^{-1}$ was attributed to the peak derived from the methylene bond. Then, the peak height ratio (A/B $\times$ 100) was calculated, where the peak height derived from the amide bond was designated as A, and the peak height derived from the methylene bond was designated as B.

Average Particle Diameter:

The average particle diameter of the water dispersion composition of the modified polyolefin resin was measured by a dynamic light scattering method using a particle size distribution measurement instrument Zetasizer Nano ZS (manufactured by Malvern Instruments Inc.).

Solution Stability Test:

The modified polyolefin resin obtained in each of Examples and Comparative Examples was dissolved into a methylcyclohexane/methyl ethyl ketone solution (mixing ratio of 80/20) in a transparent beaker to prepare a paint composition (composition solution) of the modified polyolefin resin with the concentration thereof being 15% by mass. The beaker was tightly sealed so that the solvent might not evaporate, and this was statically kept at room temperature (23°C) for 1 week. Then, the dissolution stability thereof was visually assessed with the following assessment criteria.

A: The composition solution still remained transparent, and the fluidity thereof was retained.
B: The fluidity of the composition solution was somewhat decreased, but practically there is no problem.
C: The composition solution became turbid, and the fluidity thereof was decreased.

Test of Heat Resistance (Hot Adhesion Strength):

An adhesive composition was applied onto an aluminum foil by means of a #16 Meyer bar so as to give a resin film thickness of 2 $\mu$m after dried, and then, this was dried at 80°C for 60 seconds. The aluminum foil having been applied with the composition was bonded with a cast unoriented polypropylene (CPP) sheet. After adhering by hot-pressing at 200°C and 100 kPa for 1 second, this was cut out to prepare a specimen having the width of 15 mm. The specimen was cured at 40°C for 72 hours to facilitate a crosslinking reaction of the adhesive composition. After this was kept under a constant temperature and humidity condition at 23°C and relative humidity of 50% for 24 hours, the laminate adhesion strength thereof was measured by peeling to a 180° direction and a peeling rate of 100 mm/minute at the temperature of 23°C, 80°C, or 120°C, respectively, by using an autograph system (AG-500 NX type; manufactured by Shimadzu Corp.). The test was repeated for 3 times; and the average value thereof was used as the result.
Details of the adhesive composition will be described later.

Test of Heat Resistance (Hot Load Resistance):

The adhesive composition was applied onto an oriented polypropylene (OPP) film by means of a #10 Meyer bar so as to give a film thickness of 2 $\mu$m, and then, this was dried at room temperature for one overnight. The OPP film having been applied was cut out to the width of 2.5 cm, and this was bonded with an ultrahigh rigid polypropylene substrate having been cut to the width of 2.5 cm, too. After these were adhered by hot-pressing at 160°C and 200 kPa for 10 seconds, the specimen thus obtained was cured at 40°C for 72 hours to facilitate a crosslinking reaction of the adhesive composition. After this was kept under a constant temperature and humidity condition at 23°C and relative humidity of 50% for 24 hours, 100 g of a weight was fixed to the end of the OPP film in the specimen. Under the condition that the weight was hanged, the specimen was kept in a constant temperature dryer controlled at a prescribed temperature (120°C). After this was kept for 2 hours, peeling of the coat film was assessed with the following criteria.

A: There was no peeling.
B: There was peeling, but the weight did not drop.
C: The film was peeled off, and the weight dropped.

Gel Content (%):

An appropriate amount of the adhesive composition having the same composition as above was poured into a Petri dish made of Teflon (registered trademark), and then, this was dried at 80°C for 180 seconds to prepare a film. After the film was cured at 40°C for 72 hours, 0.2 g of the film was accurately weighed; and then, this was dissolved in 100 cc of toluene by statically leaving under an atmosphere of 50°C for 24 hours. After filtration, the filtration residue was dried to measure a toluene-insoluble portion (gel). The gel content was calculated on the basis of the following equation (2).

$$(\text{toluene-insoluble weight/film weight}) \times 100 \qquad (2)$$

Cleaning Test:

Paint Preparation

Water-based urethane paint was stirred at about 1,000 rpm for 20 minutes by using a disperser. Then, about 67 g of this paint was taken into a mayonnaise bottle; and then, with stirring at about 1,200 rpm, about 13 g of the water dispersion composition of the modified polyolefin resin was added into it by using a pipette. This was stirred for 5 minutes to prepare the test paint.

Test Procedure

In a laboratory whose temperature and humidity were controlled (23°C and 50% RH), the test paint was applied onto a substrate (steel plate: Hi-Top) by means of a #30 bar coater (target wet film thickness: 50 $\mu$m). After air-dried for 60 minutes, this was soaked in a cleaning solvent (n-butyl cellosolve/deionized water = 30/70) for 5 minutes. The test piece was taken out and allowed to stand in an erected state for 1 hour. The state of the coat film after having been allowed to stand was assessed in accordance with the following criteria.

A: The coat film of 3/4 or more was peeled off.
B: Part of the coat film (less than 3/4) was peeled off.
C: The coat film was not peeled off.

Cross-cut Adhesion Test:

Preparation of Specimen

A surface of the ultrahigh rigid polypropylene plate was defatted with isopropyl alcohol. Onto this plate was applied the water dispersion composition of the modified polyolefin resin by spray coating so as to give the dry film thickness of 10 to 15 $\mu$m; and then, this was preheated at 80°C for 5 minutes. Next, a base paint was applied by spray coating; and after having been allowed to stand for 10 minutes, a clear paint was applied. After having been allowed to stand for 10 minutes, a barning process was conducted at 90°C for 30 minutes to prepare a specimen.

Test Procedure

After the specimen was allowed to stand at room temperature for 3 days, 100 squares with 2 mm distance was made on the coat film by cutting by using a cutter knife so as to reach the base plate. A cellophane adhesive tape was contacted onto it, and peeling to an angle of 180° was repeated for 10 times to assess the remaining coat film (residual squares).

Water-resistant Adhesion Test:

The specimen was prepared in the same way as the cross-cut adhesion test. After the specimen was soaked in warm water at 40°C for 10 days, the blister appeared on the surface of the coat film was visually observed. By using a cutter knife, 100 squares with 2 mm distance was made by cutting on the coat film so as to reach the base plate. A cellophane adhesive tape was contacted onto it, and peeling to an angle of 180° was made to determine a remaining degree of the coat film (residual squares). With regard to the sample that was not peeled off at all, the same test was repeated continuously for 10 times, and the remaining coat film (residual squares) after the 10 repeated peel-off was determined.
The blister was assessed in accordance with the following criteria.

Diameter: (large) 1 to 10 (small)
Frequency: (less) F, FM, M, MD, D, DD (more)

A: No blisters
B: Some blisters

Synthesis Example 1: Production of Precursor Resin (1)

In a four-neck flask equipped with a stirrer, a cooling tube, and a dropping funnel, 100 parts of propylene-butene random copolymer [P-B] (80% by mole of propylene component and 20% by mole of butene component; Tm = 85°C) was dissolved into 400 g of toluene with heating. With stirring and keeping the temperature in the system at 110°C, 4.0 parts of maleic anhydride, 4.0 parts of lauryl methacrylate, and 1.0 part of di-t-butyl peroxide each were added dropwise thereto over 3 hours. The reaction was further continued for one hour.
After the reaction, the reaction mixture was cooled to room temperature to obtain the precursor resin (1) having the weight-molecular weight of 66,000. The reaction product was charged into an excessively large amount of acetone to purify it. The grafting amounts of maleic anhydride and lauryl methacrylate were 3.3% by weight and 3.0% by weight, respectively. Then, 15 g of the precursor resin (1) thus obtained was dissolved by heating in 68 g of methylcyclohexane and 17 g of methyl ethyl ketone to obtain a solution including the precursor resin (1) (precursor solution (1)). Data including the physical properties thereof are listed in Table 1.

Synthesis Example 2: Production of Precursor Resin (2)

Except that the propylene component was changed to 95% by mole and that the butene component was changed to 5% by mole (Tm = 120°C) in the propylene-butene random copolymer [P-B] of Synthesis Example 1, the same procedure as Synthesis Example 1 was repeated to obtain the precursor resin (2) having the weight-average molecular weight of 150,000. The reaction product was charged into an excessively large amount of acetone to purify it. The grafting amounts of maleic anhydride and lauryl methacrylate were 3.5% by weight and 3.1% by weight, respectively. Then, 15 g of the precursor resin (2) thus obtained was dissolved by heating in 68 g of methylcyclohexane and 17 g of methyl ethyl ketone to obtain a solution including the precursor resin (2) (precursor solution (2)). Data including the physical properties thereof are listed in Table 1.

Synthesis Example 3: Production of Precursor Resin (3)

Except that the amount of maleic anhydride was changed to 5.0 parts, the same procedure as Synthesis Example 1 was repeated to obtain the precursor resin (3) having the weight-average molecular weight of 160,000. The reaction product was charged into an excessively large amount of acetone to purify it. The grafting amounts of maleic anhydride and lauryl methacrylate were 4.2% by weight and 3.1% by weight, respectively. Then, 15 g of the precursor resin (3) thus obtained was dissolved by heating in 68 g of methylcyclohexane and 17 g of methyl ethyl ketone to obtain a solution including the precursor resin (3) (precursor solution (3)). Data including the physical properties thereof are listed in Table 1.

Table 1

| | Raw material | | | | Precursor resin | | | |
|---|---|---|---|---|---|---|---|---|
| | Polymer | | | | Kind | Grafting amount (% by weight) | | |
| | Kind | Propylene component amount (% by mole) | Butene component amount (% by mole) | Melting point (°C) | | Maleic anhydride | Lauryl methacrylate | Mw ($\times 10^4$) |
| Synthesis Example 1 | Propylene-butene random copolymer | 80 | 20 | 85 | (1) | 3.3 | 3.0 | 6.6 |
| Synthesis Example 2 | Propylene-butene random copolymer | 95 | 5 | 120 | (2) | 15 | 3.1 | 15 |
| Synthesis Example 3 | Propylene-butene random copolymer | 80 | 20 | 85 | (3) | 4.2 | 3.1 | 16 |

Example 1: Amidation of Precursor Resin (1)

In a four-neck flask equipped with a stirrer, a cooling tube, and a dropping funnel, 100 parts (solid content) of the precursor resin (1) produced in Synthesis Example 1 was dissolved into 280 g of methylcyclohexane with heating. With stirring and keeping the temperature in the system at 90°C, 3.3 parts of 2-amino-2-methyl-1-propanol [AMP] was added thereto, and the resulting mixture was stirred for 120 minutes. After the mixture was cooled to room temperature, 70 g of methyl ethyl ketone was added thereto so as to adjust the solid content to 15.0%. By so doing, a solution including the modified polyolefin resin (1) was obtained. Data including the physical properties thereof are listed in Table 2.

Example 2: Amidation of Precursor Resin (1)

In a four-neck flask equipped with a stirrer, a cooling tube, and a dropping funnel, 100 parts (solid content) of the precursor resin (1) produced in Synthesis Example 1 was dissolved into 276 g of methylcyclohexane with heating. With stirring and keeping the temperature in the system at 90°C, 1.7 parts of 2-amino-2-methyl-1-propanol [AMP] was added thereto, and the resulting mixture was stirred for 120 minutes. After the mixture was cooled to room temperature, 69 g of methyl ethyl ketone was added thereto so as to adjust the solid content to 15.0%. By so doing, a solution including the modified polyolefin resin (2) was obtained. Data including the physical properties thereof are listed in Table 2.

Example 3: Amidation of Precursor Resin (3)

In a four-neck flask equipped with a stirrer, a cooling tube, and a dropping funnel, 100 parts (solid content) of the precursor resin (3) produced in Synthesis Example 3 was dissolved into 273 g of methylcyclohexane with heating. With stirring and keeping the temperature in the system at 90°C, 0.9 part of 2-amino-2-methyl-1-propanol [AMP] was added thereto, and the resulting mixture was stirred for 120 minutes. After the mixture was cooled to room temperature, 68 g of methyl ethyl ketone was added thereto so as to adjust the solid content to 15.0%. By so doing, a solution including the modified polyolefin resin (3) was obtained. Data including the physical properties thereof are listed in Table 2.

Table 2

|  | Raw material | Amidation | | | Modified polyolefin resin | |
|---|---|---|---|---|---|---|
|  | Precursor resin Kind | Yes/no | Component (III) Kind | Blending amount (parts) | Kind | Peak height ratio (A/B - 100) |
| Example 1 | (1) | Yes | 2-Amino-2-methyl-1-propanol | 3.3 | (1) | 5.679 |
| Example 2 | (1) | Yes | 2-Amino-2-methyl-1-propanol | 1.7 | (2) | 2.573 |
| Example 3 | (3) | Yes | 2-Amino-2-methyl-1-propanol | 0.9 | (3) | 3.740 |

Production and Assessment of Adhesive Composition Example 4

Into 20 g of the solution including the modified polyolefin resin (1) obtained in Example 1 was added 3.0 mg of dibutyl tin dilaurate (hereinafter, "DBTL") as a reaction catalyst; and then, they were mixed. To the mixture was added 1.1 g of a polyfunctional isocyanate compound (trade name: Takenate 177N, manufactured by Mitsui Chemicals, Inc.) (NCO/OH = 2.1); and the resulting mixture was further mixed to obtain an adhesive composition (1). By using this adhesive composition (1), the heat resistance test, the gel content measurement, and the solution stability test were carried out. The results thereof are listed in Table 3.

Example 5

Except that the solution including the modified polyolefin resin (2) obtained in Example 2 was used, the same procedure as Example 4 was repeated to obtain an adhesive composition (2). By using this adhesive composition (2), the heat resistance test, the gel content measurement, and the solution stability test were carried out. The results thereof are listed in Table 3.

Example 6

Except that the solution including the modified polyolefin resin (3) obtained in Example 3 was used, the same procedure as Example 4 was repeated to obtain an adhesive composition (3). By using this adhesive composition (3), the heat resistance test, the gel content measurement, and the solution stability test were carried out. The results thereof are listed in Table 3.

Comparative Example 1

Into 20 g of the precursor solution (1) obtained in Synthesis Example 1 was added 3.0 mg of dibutyl tin dilaurate (hereinafter, "DBTL") as the reaction catalyst, and then, they were mixed to obtain an adhesive composition (4). By using this adhesive composition (4), the heat resistance test, the gel content measurement, and the solution stability test were carried out. The results thereof are listed in Table 3.

Comparative Example 2

Except that the precursor solution (1) obtained in Synthesis Example 1 was used, the same procedure as Example 4 was repeated to obtain an adhesive composition (5). By using this adhesive composition (5), the heat resistance test, the gel content measurement, and the solution stability test were carried out. The results thereof are listed in Table 3.

Comparative Example 3

Except that the precursor solution (2) obtained in Synthesis Example 2 was used, the same procedure as Example 4 was repeated to obtain an adhesive composition (6). By using this adhesive composition (6), the heat resistance test, the gel content measurement, and the solution stability test were carried out. The results thereof are listed in Table 3.

EP 3 805 274 B1

Table 3

| | Raw material | Adhesive composition | | | | | | | |
|---|---|---|---|---|---|---|---|---|---|
| | | Kind | Isocyanate compound | Gel content (%) | Hot strength (N/15 mm) | | | Hot load resistance | Solution stability test |
| | | | | | 23°C | 80°C | 120°C | 120°C | |
| Example 4 | Modified polyolefin resin (1) | (1) | Yes | 87 | 9 | 9 | 7 | A | A |
| Example 5 | Modified polyolefin resin (2) | (2) | Yes | 87 | 10 | 10 | 8 | A | A |
| Example 6 | Modified polyolefin resin (3) | (3) | Yes | 90 | - | - | - | A | A |
| Comparative Example 1 | Precursor solution (1) | (4) | No | 0 | 12 | 9 | 0 | C | A |
| Comparative Example 2 | Precursor solution (1) | (5) | Yes | 78 | 11 | 12 | 6 | C | A |
| Comparative Example 3 | Precursor solution (2) | (6) | Yes | 80 | 10 | 9 | 8 | A | C |

As can be clearly seen in Table 3, the modified polyolefin resin according to the present invention is high in the gel content and excellent in the heat resistance at high temperature of 120°C (hot strength and hot load resistance) as well as in the solution stability (Examples 4 to 6).

On the other hand, in the precursor solution (1) that was not amidated, the gel content was lower as compared with Examples 4 to 6, and the heat resistance at high temperature of 120°C was drastically deteriorated (Comparative Example 2). In the precursor solution (2) that used a high melting point resin as a raw material and was not amidated, the heat resistance was excellent, but the solution stability was poor (Comparative Example 3). When the precursor solution (1) that was not amidated was assessed without adding the polyfunctional isocyanate compound, the gel content was 0%, and neither the hot strength nor the hot load resistance at high temperature of 120°C was exhibited (Comparative Example 1).

Example 7

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 70,000; Tm of 75°C; MAH grafting amount of 2 to 5% by mass) of propylene-butene random copolymer [P-B] (70% by mole of propylene component and 30% by mole of butene component), 9.6 g of toluene, and 28.8 g of ethylene glycol monobutyl ether (molecular weight of 118.2). After the air inside the flask was purged with nitrogen gas at room temperature, the mixture was stirred under a nitrogen gas atmosphere and with a temperature of 125°C (inside the flask) for 30 minutes. Next, 4.3 g of 2-amino-2-methyl-1-propanol (AMP) was added thereto. After stirred for 120 minutes, 3 g of an alkylamine-type emulsifier (trade name: Puremeel (registered trademark) CCS-80; manufactured by Sanyo Chemical Industries, Ltd.) was added thereto at 95°C (inside the flask), and then, the resulting mixture was further stirred for 30 minutes. Next, 209 g of deionized water at 90°C was added thereto over 120 minutes at 75°C (inside the flask). After completion of the addition of the deionized water, the reaction mixture was cooled to 30°C (inside the flask) with stirring. Next, this was heated with stirring to 95°C (inside the flask), and then, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including the modified polyolefin resin was obtained.

Example 8

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 70,000; Tm of 85°C; MAH grafting amount of 2 to 5% by mass) of propylene-butene random copolymer [P-B] (80% by mole of propylene component and 20% by mole of butene component), 9.6 g of toluene, and 28.8 g of ethylene glycol monobutyl ether (molecular weight of 118.2). After the air inside the flask was purged with nitrogen gas at room temperature, the mixture was stirred under a nitrogen gas atmosphere and with a temperature of 125°C (inside the flask) for 30 minutes. Next, 3 g of 2-amino-2-methyl-1-propanol (AMP) was added thereto. After stirred for 120 minutes, 3 g of an alkylamine-type emulsifier (trade name: Puremeel (registered trademark) CCS-80; manufactured by Sanyo Chemical Industries, Ltd.) was added thereto at 95°C (inside the flask), and then, the resulting mixture was further stirred for 30 minutes. Next, 211 g of deionized water at 90°C was added thereto over 120 minutes at 75°C (inside the flask). After completion of the addition of the deionized water, the reaction mixture was cooled to 30°C (inside the flask) with stirring. Next, this was heated with stirring to 95°C (inside the flask), and then, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including the modified polyolefin resin was obtained.

Example 9

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 100,000; Tm of 85°C; MAH grafting amount of 2 to 5% by mass) of propylene-butene random copolymer [P-B] (65% by mole of propylene component and 35% by mole of butene component), 9.6 g of toluene, and 28.8 g of ethylene glycol monobutyl ether (molecular weight of 118.2). After the air inside the flask was purged with nitrogen gas at room temperature, the mixture was stirred under a nitrogen gas atmosphere and with a temperature of 125°C (inside the flask) for 30 minutes. Next, 3 g of 2-amino-2-methyl-1-propanol (AMP) was added thereto. After stirred for 120 minutes, 3 g of an alkylamine-type emulsifier (trade name: Puremeel (registered trademark) CCS-80; manufactured by Sanyo Chemical Industries, Ltd.) was added thereto at 95°C (inside the flask), and then, the resulting mixture was further stirred for 30 minutes. Next, 211 g of deionized water at 90°C was added thereto over 120 minutes at 75°C (inside the flask). After completion of the addition of the deionized water, the reaction mixture was cooled to 30°C (inside the flask) with stirring. Next, this was heated with stirring to 95°C (inside the flask), and then, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including the modified polyolefin resin was obtained.

Example 10

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 120,000; Tm of 85°C; MAH grafting amount of 2 to 5% by mass) of propylene-butene random copolymer [P-B] (65% by mole of propylene component and 35% by mole of butene component), 9.6 g of toluene, and 28.8 g of ethylene glycol monobutyl ether (molecular weight of 118.2). After the air inside the flask was purged with nitrogen gas at room temperature, the mixture was stirred under a nitrogen gas atmosphere and with a temperature of 125°C (inside the flask) for 30 minutes. Next, 5.4 g of 2-amino-2-methyl-1-propanol (AMP) was added thereto. After stirred for 120 minutes, 3 g of an alkylamine-type emulsifier (trade name: Puremeel (registered trademark) CCS-80; manufactured by Sanyo Chemical Industries, Ltd.) was added thereto at 95°C (inside the flask), and then, the resulting mixture was further stirred for 30 minutes. Next, 208 g of deionized water at 90°C was added thereto over 120 minutes at 75°C (inside the flask). After completion of the addition of the deionized water, the reaction mixture was cooled to 30°C (inside the flask) with stirring. Next, this was heated with stirring to 95°C (inside the flask), and then, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including the modified polyolefin resin was obtained.

Comparative Example 4

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 70,000; Tm of 75°C; MAH grafting amount of 2 to 5% by mass), 6.6 g of toluene, and 19.8 g of ethylene glycol monobutyl ether (molecular weight of 118.2); and then, the mixture was stirred at 95°C (inside the flask) for 30 minutes. Next, 4.4 g of N,N-dimethyl ethanolamine (DMEA) was added thereto. After stirred for 30 minutes, 3 g of an alkylamine-type emulsifier (trade name: Puremeel (registered trademark) CCS-80; manufactured by Sanyo Chemical Industries, Ltd.) was added thereto, and then, the resulting mixture was further stirred for 30 minutes. Next, 221 g of deionized water at 90°C was added thereto over 120 minutes. After completion of the addition of the deionized water, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including an acid-modified polyolefin resin was obtained.

Comparative Example 5

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 70,000; Tm of 85°C; MAH grafting amount of 2 to 5% by mass), 9.6 g of toluene, and 28.8 g of ethylene glycol monobutyl ether (molecular weight of 118.2); and then, the mixture was stirred at 95°C (inside the flask) for 30 minutes. Next, 3 g of N,N-dimethyl ethanolamine (DMEA) was added thereto. After stirred for 30 minutes, 3 g of an alkylamine-type emulsifier (trade name: Puremeel (registered trademark) CCS-80; manufactured by Sanyo Chemical Industries, Ltd.) was added thereto, and then, the resulting mixture was further stirred for 30 minutes. Next, 211 g of deionized water at 90°C was added thereto over 120 minutes. After completion of the addition of the deionized water, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including an acid-modified polyolefin resin was obtained.

Comparative Example 6

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 100,000; Tm of 85°C; MAH grafting amount of 2 to 5% by mass), 12 g of toluene, and 36 g of ethylene glycol monobutyl ether (molecular weight of 118.2); and then, the mixture was stirred at 95°C (inside the flask) for 30 minutes. Next, 3 g of N,N-dimethyl ethanolamine (DMEA) was added thereto. After stirred for 30 minutes, 3 g of an alkylamine-type emulsifier (trade name: Puremeel (registered trademark) CCS-80; manufactured by Sanyo Chemical Industries, Ltd.) was added thereto, and then, the resulting mixture was further stirred for 30 minutes. Next, 257 g of deionized water at 90°C was added thereto over 120 minutes. After completion of the addition of the deionized water, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including an acid-modified polyolefin resin was obtained.

Comparative Example 7

Into a four-neck flask equipped with a stirrer, a cooling tube, a dropping funnel, and a nitrogen introduction tube were added 60 g of maleic anhydride-modified (MAH-modified) polyolefin resin (weight-average molecular weight (Mw) of 120,000; Tm of 85°C; MAH grafting amount of 2 to 5% by mass), 12 g of toluene, and 36 g of ethylene glycol monobutyl ether (molecular weight of 118.2); and then, the mixture was stirred at 95°C (inside the flask) for 30 minutes. Next, 6 g of N,N-dimethyl ethanolamine (DMEA) was added thereto. After stirred for 30 minutes, 3 g of an alkylamine-type emulsifier (trade name: Puremeel (registered trademark) CCS-80; manufactured by Sanyo Chemical Industries, Ltd.) was added thereto, and then, the resulting mixture was further stirred for 30 minutes. Next, 254 g of deionized water at 90°C was added thereto over 120 minutes. After completion of the addition of the deionized water, part of toluene and ethylene glycol monobutyl ether was distilled out under a reduced pressure. Next, the solution was cooled to room temperature with stirring; and then, concentration of the solid content was adjusted to 30% by weight by adding deionized water. By so doing, a water dispersion including an acid-modified polyolefin resin was obtained.

By using the water dispersion compositions of Examples 7 to 10 and Comparative Examples 4 to 7, the cleaning test, the cross-cut adhesion test, and the water-resistant adhesion test were carried out. These results as well as the physical properties thereof are summarized in Table 4.

Table 4

| | | Physical properties of precursor resin | | | IR peak intensity (Abs) | | IR peak height ratio | Average particle diameter (nm) | Cleaning test | Cross-cut adhesion test | Water-resistant adhesion test | |
|---|---|---|---|---|---|---|---|---|---|---|---|---|
| | | Weight-average molecular weight (x10⁴) | Melting point (°C) | Acid value (mg/KOH) | A | B | A/B×100 (%) | | | Residual squares (/100) | Cross-cut adhesion Residual squares (/100) | Blister |
| Example | 7 | 7 | 75 | 15-20 | 2.0 | 18.2 | 11.0 | 150 | B | 100 | 100 | |
| | 8 | 7 | 85 | 15-20 | 1.3 | 18.3 | 7.1 | 130 | A | 100 | 100 | A |
| | 9 | 10 | 85 | 15-20 | 2.0 | 19.2 | 10.4 | 150 | B | 100 | 100 | A |
| | 10 | 12 | 85 | 20-25 | 3.0 | 22.4 | 13.4 | 180 | B | 100 | 100 | A |
| Comparative Example | 4 | 7 | 75 | 15-20 | 0 | — | 0 | 110 | C | 100 | 100 | A |
| | 5 | 7 | 85 | 15-20 | 0 | — | 0 | 150 | C | 100 | 100 | A |
| | 6 | 10 | 85 | 15-20 | 0 | — | 0 | 170 | C | 100 | 100 | A |
| | 7 | 12 | 85 | 20-25 | 0 | — | 0 | 170 | C | 100 | 100 | A |

**Claims**

1. A modified polyolefin resin, comprising a polyolefin resin (I) modified with an $\alpha,\beta$-unsaturated carboxylic acid or a derivative thereof (II) and with an amino alcohol having a primary or a secondary amino group (III), wherein when a peak height derived from an amide bond is designated as A and a peak height derived from a methylene bond is designated as B, both the peaks being observed in an IR spectrum measurement, a peak height ratio (A/B × 100) is in a range of 2.0 to 15.0%, whereby the IR spectrum is obtained as described in the experimental section of the application.

2. The modified polyolefin resin according to claim 1, wherein when a peak height derived from an amide bond is designated as A and a peak height derived from a methylene bond is designated as B, both the peaks being observed in an IR spectrum measurement, a peak height ratio (A/B × 100) is in a range of 2.0 to 6.0%, whereby the IR spectrum is obtained as described in the experimental section of the application.

3. The modified polyolefin resin according to claim 1, wherein when a peak height derived from an amide bond is designated as A and a peak height derived from a methylene bond is designated as B, both the peaks being observed in an IR spectrum measurement, a peak height ratio (A/B × 100) is in a range of 3.0 to 15.0%, whereby the IR spectrum is obtained as described in the experimental section of the application.

4. The modified polyolefin resin according to any one of claims 1 to 3, wherein the polyolefin resin (I) is at least one selected from the group consisting of polypropylene, ethylene-propylene copolymer, propylene-1-butene copolymer, and ethylene-propylene-1-butene copolymer.

5. The modified polyolefin resin according to any one of claims 1 to 4, wherein the $\alpha,\beta$-unsaturated carboxylic acid or the derivative thereof (II) is at least one selected from the group consisting of maleic anhydride, itaconic anhydride, and maleic acid.

6. The modified polyolefin resin according to any one of claims 1 to 5, wherein the resin is further modified with a (meth)acrylate ester (IV) represented by the following general formula (1)
Chem. 1

$$CH_2=C(R^1)COOR^2 \qquad (1)$$

,whereby in the general formula (1), $R^1$ represents a hydrogen atom or a methyl group; $R^2$ represents a hydrocarbon group represented by $C_nH_{2n+1}$; and n represents an integer of 8 to 18.

7. The modified polyolefin resin according to any one of claims 1 to 6, wherein a weight-average molecular weight thereof measured with gel permeation chromatography (GPC) in terms of polystyrene is in a range of 10,000 to 200,000, whereby the GPC measurement is carried out as described in the experimental section of the application.

8. An adhesive comprising the modified polyolefin resin according to any one of claims 1 to 7.

9. A primer comprising the modified polyolefin resin according to any one of claims 1 to 7.

10. A paint comprising the modified polyolefin resin according to any one of claims 1 to 7.

11. An ink comprising the modified polyolefin resin according to any one of claims 1 to 7.

12. A method for producing a modified polyolefin resin, the method comprising:

    a process of modifying a polyolefin resin (I) with an $\alpha,\beta$-unsaturated carboxylic acid or
    a derivative thereof (II) to obtain a precursor resin, and
    a process of modifying the precursor resin with an amino alcohol having a primary or
    a secondary amino group (III) to obtain the modified polyolefin resin,

        wherein when a peak height derived from an amide bond is designated as A and a peak height derived from a methylene bond is designated as B, both the peaks being observed in an IR spectrum measurement, whereby the IR spectrum is obtained as described in the experimental section of the application, a peak height ratio (A/B × 100) is in a range of 2.0 to 15.0%.

13. The method for producing a modified polyolefin resin according to claim 12, wherein when a peak height derived from an amide bond is designated as A and a peak height derived from a methylene bond is designated as B, both the peaks being observed in an IR spectrum measurement, whereby the IR spectrum is obtained as described in the experimental section of the application, a peak height ratio (A/B × 100) is in a range of 2.0 to 6.0%.

14. The method for producing a modified polyolefin resin according to claim 12, wherein when a peak height derived from an amide bond is designated as A and a peak height derived from a methylene bond is designated as B, both the peaks being observed in an IR spectrum measurement, whereby the IR spectrum is obtained as described in the experimental section of the application, a peak height ratio (A/B × 100) is 3.0 to 15.0%.

**Patentansprüche**

1. Modifiziertes Polyolefinharz, das ein Polyolefinharz (I) umfasst, das mit einer $\alpha,\beta$-ungesättigten Carbonsäure oder einem Derivat davon (II) und mit einem Aminoalkohol mit einer primären oder einer sekundären Aminogruppe (III) modifiziert ist, wobei, wenn eine Peakhöhe, die von einer Amidbindung stammt, als A bezeichnet wird, und eine Peakhöhe, die von einer Methylenbindung stammt, als B bezeichnet wird, wobei beide Peaks in einer Messung des IR-Spektrums auftreten, ein Peakhöhenverhältnis (A/B × 100) in einem Bereich von 2,0 bis 15,0 % liegt, wobei das IR-Spektrum so erhalten wird, wie es im experimentellen Teil der Anmeldung beschrieben ist.

2. Modifiziertes Polyolefinharz nach Anspruch 1, wobei, wenn eine Peakhöhe, die von einer Amidbindung stammt, als A bezeichnet wird, und eine Peakhöhe, die von einer Methylenbindung stammt, als B bezeichnet wird, wobei beide Peaks in einer Messung des IR-Spektrums auftreten, ein Peakhöhenverhältnis (A/B × 100) in einem Bereich von 2,0 bis 6,0 % liegt, wobei das IR-Spektrum so erhalten wird, wie es im experimentellen Teil der Anmeldung beschrieben ist.

3. Modifiziertes Polyolefinharz nach Anspruch 1, wobei, wenn eine Peakhöhe, die von einer Amidbindung stammt, als A bezeichnet wird, und eine Peakhöhe, die von einer Methylenbindung stammt, als B bezeichnet wird, wobei beide Peaks in einer Messung des IR-Spektrums auftreten, ein Peakhöhenverhältnis (A/B × 100) in einem Bereich von 3,0 bis 15,0 % liegt, wobei das IR-Spektrum so erhalten wird, wie es im experimentellen Teil der Anmeldung beschrieben ist.

4. Modifiziertes Polyolefinharz nach einem der Ansprüche 1 bis 3, wobei das Polyolefinharz (I) mindestens eines ist, das aus der Gruppe, bestehend aus Polypropylen, Ethylen-Propylen-Copolymer, Propylen-1-Buten-Copolymer und Ethylen-Propylen-1-Buten-Copolymer, ausgewählt ist.

5. Modifiziertes Polyolefinharz nach einem der Ansprüche 1 bis 4, wobei die $\alpha,\beta$-ungesättigte Carbonsäure oder das Derivat davon (II) mindestens eine(s) ist, die/das aus der Gruppe, bestehend aus Maleinsäureanhydrid, Itaconsäureanhydrid und Maleinsäure, ausgewählt ist.

6. Modifiziertes Polyolefinharz nach einem der Ansprüche 1 bis 5, wobei das Harz ferner mit einem (Meth)acrylatester (IV) modifiziert ist, der durch die folgende allgemeine Formel (1) dargestellt ist

Chem. 1

$$CH_2=C(R^1)COOR^2 \qquad (1),$$

wobei in der allgemeinen Formel (1) $R^1$ ein Wasserstoffatom oder eine Methylgruppe darstellt; $R^2$ eine Kohlenwasserstoffgruppe darstellt, die durch $C_nH_{2n+1}$ dargestellt ist; und n eine ganze Zahl von 8 bis 18 darstellt.

7. Modifiziertes Polyolefinharz nach einem der Ansprüche 1 bis 6, wobei ein Gewichtsmittel des Molekulargewichts davon, das mittels Gelpermeationschromatographie (GPC) bezogen auf Polystyrol gemessen wird, in einem Bereich von 10000 bis 200000 liegt, wobei die GPC-Messung so durchgeführt wird, wie es im experimentellen Teil der Anmeldung beschrieben ist.

8. Haftmittel, welches das modifizierte Polyolefinharz nach einem der Ansprüche 1 bis 7 umfasst.

9. Haftvermittler, der das modifizierte Polyolefinharz nach einem der Ansprüche 1 bis 7 umfasst.

10. Anstrichmittel, welches das modifizierte Polyolefinharz nach einem der Ansprüche 1 bis 7 umfasst.

11. Druckfarbe, die das modifizierte Polyolefinharz nach einem der Ansprüche 1 bis 7 umfasst.

12. Verfahren zur Herstellung eines modifizierten Polyolefinharzes, wobei das Verfahren umfasst:

einen Vorgang des Modifizierens eines Polyolefinharzes (I) mit einer $\alpha,\beta$-ungesättigten Carbonsäure oder einem Derivat davon (II) zum Erhalten eines Vorstufenharzes, und
einen Vorgang des Modifizierens des Vorstufenharzes mit einem Aminoalkohol mit einer primären oder einer sekundären Aminogruppe (III) zum Erhalten des modifizierten Polyolefinharzes,

wobei, wenn eine Peakhöhe, die von einer Amidbindung stammt, als A bezeichnet wird, und eine Peakhöhe, die von einer Methylenbindung stammt, als B bezeichnet wird, wobei beide Peaks in einer Messung des IR-Spektrums auftreten, wobei das IR-Spektrum so erhalten wird, wie es im experimentellen Teil der Anmeldung beschrieben ist,
ein Peakhöhenverhältnis (A/B $\times$ 100) in einem Bereich von 2,0 bis 15,0 % liegt.

13. Verfahren zur Herstellung eines modifizierten Polyolefinharzes nach Anspruch 12, wobei, wenn eine Peakhöhe, die von einer Amidbindung stammt, als A bezeichnet wird, und eine Peakhöhe, die von einer Methylenbindung stammt, als B bezeichnet wird, wobei beide Peaks in einer Messung des IR-Spektrums auftreten, wobei das IR-Spektrum so erhalten wird, wie es im experimentellen Teil der Anmeldung beschrieben ist, ein Peakhöhenverhältnis (A/B $\times$ 100) in einem Bereich von 2,0 bis 6,0 % liegt.

14. Verfahren zur Herstellung eines modifizierten Polyolefinharzes nach Anspruch 12, wobei, wenn eine Peakhöhe, die von einer Amidbindung stammt, als A bezeichnet wird, und eine Peakhöhe, die von einer Methylenbindung stammt, als B bezeichnet wird, wobei beide Peaks in einer Messung des IR-Spektrums auftreten, wobei das IR-Spektrum so erhalten wird, wie es im experimentellen Teil der Anmeldung beschrieben ist, ein Peakhöhenverhältnis (A/B $\times$ 100) in einem Bereich von 3,0 bis 15,0 % liegt.

**Revendications**

1. Résine de polyoléfine modifiée, comprenant une résine de polyoléfine (I) modifiée avec un acide carboxylique $\alpha,\beta$-insaturé ou un dérivé de celui-ci (II) et avec un alcool aminé ayant un groupe amino primaire ou secondaire (III), dans laquelle lorsqu'une hauteur de pic dérivée d'une liaison amide est désignée par A et une hauteur de pic dérivée d'une liaison méthylène est désignée par B, les deux pics étant observés dans une mesure de spectre IR, un rapport de hauteurs de pic (A/B x 100) est dans une plage de 2,0 à 15,0 %, moyennant quoi le spectre IR est obtenu tel que décrit dans la section expérimentale de la demande.

2. Résine de polyoléfine modifiée selon la revendication 1, dans laquelle lorsqu'une hauteur de pic dérivée d'une liaison amide est désignée par A et une hauteur de pic dérivée d'une liaison méthylène est désignée par B, les deux pics étant observés dans une mesure de spectre IR, un rapport de hauteurs de pic (A/B x 100) est dans une plage de 2,0 à 6,0 %, moyennant quoi le spectre IR est obtenu tel que décrit dans la section expérimentale de la demande.

3. Résine de polyoléfine modifiée selon la revendication 1, dans laquelle lorsqu'une hauteur de pic dérivée d'une liaison amide est désignée par A et une hauteur de pic dérivée d'une liaison méthylène est désignée par B, les deux pics étant observés dans une mesure de spectre IR, un rapport de hauteurs de pic (A/B x 100) est dans une plage de 3,0 à 15,0 %, moyennant quoi le spectre IR est obtenu tel que décrit dans la section expérimentale de la demande.

**4.** Résine de polyoléfine modifiée selon l'une quelconque des revendications 1 à 3, dans laquelle la résine de polyoléfine (I) est au moins une sélectionnée parmi le groupe constitué du polypropylène, d'un copolymère d'éthylène-propylène, d'un copolymère de propylène-1-butène et d'un copolymère d'éthylène-propylène-1-butène.

**5.** Résine de polyoléfine modifiée selon l'une quelconque des revendications 1 à 4, dans laquelle l'acide carboxylique $\alpha,\beta$-insaturé ou le dérivé de celui-ci (II) est au moins un sélectionné parmi le groupe constitué de l'anhydride maléique, l'anhydride itaconique et l'acide maléique.

**6.** Résine de polyoléfine modifiée selon l'une quelconque des revendications 1 à 5, dans laquelle la résine est en outre modifiée avec un ester de (méth)acrylate (IV) représenté par la formule générale suivante (1)
Chim. 1

$$CH_2=C(R^1)COOR^2 \qquad (1),$$

moyennant quoi dans la formule générale (1), $R^1$ représente un atome d'hydrogène ou un groupe méthyle ; $R^2$ représente un groupe hydrocarbure représenté par $C_nH_{2n+1}$ ; et n représente un entier de 8 à 18.

**7.** Résine de polyoléfine modifiée selon l'une quelconque des revendications 1 à 6, dans laquelle un poids moléculaire moyen en poids de celle-ci mesuré avec une chromatographie d'exclusion diffusion (GPC) en termes de polystyrène est dans une plage de 10 000 à 200 000, moyennant quoi la mesure de GPC est réalisée tel que décrit dans la section expérimentale de la demande.

**8.** Adhésif comprenant la résine de polyoléfine modifiée selon l'une quelconque des revendications 1 à 7.

**9.** Apprêt comprenant la résine de polyoléfine modifiée selon l'une quelconque des revendications 1 à 7.

**10.** Peinture comprenant la résine de polyoléfine modifiée selon l'une quelconque des revendications 1 à 7.

**11.** Encre comprenant la résine de polyoléfine modifiée selon l'une quelconque des revendications 1 à 7.

**12.** Procédé de production d'une résine de polyoléfine modifiée, le procédé comprenant :

un processus de modification d'une résine de polyoléfine (I) avec un acide carboxylique $\alpha,\beta$-insaturé ou un dérivé de celui-ci (II) pour obtenir une résine précurseur, et
un processus de modification de la résine précurseur avec un alcool aminé ayant un groupe amino primaire ou secondaire (III) pour obtenir la résine de polyoléfine modifiée,
dans lequel lorsqu'une hauteur de pic dérivée d'une liaison amide est désignée par A et une hauteur de pic dérivée d'une liaison méthylène est désignée par B, les deux pics étant observés dans une mesure de spectre IR, moyennant quoi le spectre IR est obtenu tel que décrit dans la section expérimentale de la demande, un rapport de hauteurs de pic (A/B x 100) est dans une plage de 2,0 à 15,0 %.

**13.** Procédé de production d'une résine de polyoléfine modifiée selon la revendication 12, dans lequel lorsqu'une hauteur de pic dérivée d'une liaison amide est désignée par A et une hauteur de pic dérivée d'une liaison méthylène est désignée par B, les deux pics étant observés dans une mesure de spectre IR, moyennant quoi le spectre IR est obtenu tel que décrit dans la section expérimentale de la demande,
un rapport de hauteurs de pic (A/B x 100) est dans une plage de 2,0 à 6,0 %.

**14.** Procédé de production d'une résine de polyoléfine modifiée selon la revendication 12, dans lequel lorsqu'une hauteur de pic dérivée d'une liaison amide est désignée par A et une hauteur de pic dérivée d'une liaison méthylène est désignée par B, les deux pics étant observés dans une mesure de spectre IR, moyennant quoi le spectre IR est obtenu tel que décrit dans la section expérimentale de la demande,
un rapport de hauteurs de pic (A/B x 100) est de 3,0 à 15,0 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012062352 A
- JP 2001279048 A
- EP 1980578 A1
- EP 2314648 A1
- JP 2015067784 A